# EUROPÄISCHE PATENTSCHRIFT

(11) **EP 2 512 887 B1**
(45) Veröffentlichungstag und Bekanntmachung des Hinweises auf die Patenterteilung: **13.07.2016**
(21) Anmeldenummer: 10798308.2
(22) Anmeldetag: 17.12.2010
(51) Int. Cl.: B60T 8/1755, B60T 8/1766

(54) **VERFAHREN UND BREMSSYSTEM ZUR FAHRSTABILITÄTSREGELUNG EINES FAHRZEUGS**
METHOD AND BRAKE SYSTEM FOR CONTROLLING THE DRIVING STABILITY OF A VEHICLE
PROCÉDÉ ET SYSTÈME DE FREINAGE POUR LA RÉGULATION DE LA STABILITÉ DIRECTIONNELLE D'UN VÉHICULE

(30) Priorität: 17.12.2009 DE 102009058721
(43) Veröffentlichungstag der Anmeldung: 24.10.2012
(73) Patentinhaber: Continental Teves AG & Co. oHG, 60488 Frankfurt (DE)
(72) Erfinder: MUNTU, Matthias, 65719 Hofheim (DE); BREMEIER, Volker, 65934 Frankfurt (DE)
(86) Internationale Anmeldenummer: PCT/EP2010/070130
(87) Internationale Veröffentlichungsnummer: WO 2011/073415

(56) Entgegenhaltungen:
- WO-A1-2009/077835
- US-A1- 2003 230 933
- US-A1- 2004 176 899

## Beschreibung

Die Erfindung betrifft ein Verfahren zur Fahrstabilitätsregelung eines Fahrzeugs gemäß Oberbegriff von Anspruch 1 sowie ein Bremssystem gemäß Oberbegriff von Anspruch 9.

Bei einer Fahrstabilitätsregelung wird das Fahrverhalten eines Fahrzeugs derart beeinflusst, dass es für den Fahrer in kritischen Situationen besser beherrschbar wird. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrverhalten zu verleihen.

Unter dem Begriff Fahrstabilitätsregelung lassen sich mehrere Prinzipien zur Beeinflussung des Fahrverhaltens eines Fahrzeugs mittels vorgebbarer Bremsmomente an einzelnen Radbremsen und mittels Eingriff in das Motormanagement des Antriebsmotors zusammenfassen. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, um Kippregelung (ARP), die ein Kippen des Fahrzeugs um seine Längsachse verhindert, sowie um eine Giermomentregelung (ESC), welche für stabile Fahrzustände beim Gieren des Fahrzeugs um die Hochachse sorgt. Bei der Giermomentregelung wird durch gezieltes Abbremsen einzelner Räder ein Zusatzgiermoment aufgebaut um die Gierratendifferenz zwischen gemessener Ist-Gierrate und anhand eines Fahrzeugmodells bestimmter Soll-Gierrate zu verringern, wobei häufig zusätzlich eine Regelung des Schwimmwinkels erfolgt.

Bisher bekannte Systeme zur Fahrstabilitätsregelung eines Fahrzeugs sehen eine starre Aufteilung des stabilisierenden Zusatzgiermomentes um die Hochachse zwischen der Vorder- und Hinterachse während einer Übersteuersituation vor, wobei überwiegend an der Vorderachse ein Bremsmoment erzeugt wird. Das asymmetrische Bremsmoment an einem Rad der Vorderachse kann hierbei zu einer unerwünschten Rückwirkung auf die Lenkung führen.

Bei Fahrzeugen mit einem hydraulischen Bremssystem erfolgt ein fahrerunabhängiger Aufbau von Bremsmoment über das Aktivieren einer Hydraulikpumpe und eine geeignete Ansteuerung elektromagnetischer Ventile. Dies hat den Nachteil, dass für den Fahrer störende Geräusche entstehen.

Ein Verfahren gemäß dem Oberbegriff der unabhängigen Ansprüche 1 und 9 ist aus dem Dokument WO 2009/077835 A1 bekannt.

Der Erfindung liegt die Aufgabe zugrunde, eine Fahrstabilitätsregelung bereitzustellen, die für den Fahrer komfortabler ist.

Diese Aufgabe wird erfindungsgemäß durch ein Verfahren gemäß Anspruch 1 und ein Bremssystem gemäß Anspruch 9 gelöst.

Es wird also ein Verfahren bereitgestellt, bei dem die Fahrstabilität eines Fahrzeugs geregelt wird, wobei eine Gierratendifferenz mittels eines Zusatzgiermoments beeinflusst wird, welches durch den fahrerunabhängigen Aufbau von Bremsmoment an einem oder mehreren Rädern erzeugt wird, wobei eine Aufteilung des das Zusatzgiermoment beeinflussenden Bremsmoments in Übersteuersituationen zwischen der Vorder- und Hinterachse des Fahrzeugs variabel erfolgt. Zweckmäßigerweise wird hierbei die Fahrstabilität mit Hilfe der vorhandenen ESC-Sensorik erfasst. Wenn das Bremsmoment vollständig an der Hinterachse aufgebaut werden kann, entfallen etwaige Lenkrückwirkungen des Bremseingriffs komplett. Andernfalls werden diese abgeschwächt, womit die Fahrstabilitätsregelung für den Fahrer komfortabler wird.

Bei Fahrzeugen mit einem elektrischen bzw. elektrisch betätigten Bremssystem an der Hinterachse und einem hydraulischen Bremssystem an der Vorderachse wird ein Komfortgewinn dadurch erzielt, dass ein fahrerunabhängiger Aufbau von Bremsmoment bzw. ein aktiver Längskraftaufbau an der Hinterachse ohne störende Geräusche einer Hydraulikpumpe erreicht wird.

Bei Fahrzeugen, welche einen elektrischen Antrieb an der Hinterachse besitzen, vorzugsweise Radnabenmotoren, kann ein aktiver Längskraftaufbau auch mittels des Schleppmoments eines elektrischen Antriebs im Generatorbetrieb erfolgen.

Erfindungsgemäß wird der Anteil des Bremsmoments an der Hinterachse des Fahrzeugs abhängig von der Größe der Gierratendifferenz gewählt. Je nach Größe des benötigten Zusatzgiermoments könnten sonst Bremsmomente an der Hinterachse angefordert werden, welche ohne Eingreifen einer Schlupfregelung zu einem Verlust der Fahrstabilität führen würden.

Vorzugsweise wird eine feste Aufteilung des Bremsmoments zwischen der Vorder- und Hinterachse des Fahrzeugs gewählt, wenn die zeitliche Änderung der Gierratendifferenz einen vorgegebenen Schwellwert überschreitet. Aufgrund der schnellen zeitlichen Änderung ist zu erwarten, dass Bremseingriffe erforderlich sind, welche ein Überbremsen der Hinterachse bzw. ein Eingreifen eines Schlupfreglers zur Längskraftüberwachung verursachen würden, was einen zeitlichen Verzug in der Giermomentregelung durch den Transfer des Bremsmoments von der Hinterachse zur Vorderachse zur Folge hätte. Durch Wahl einer festen Aufteilung zwischen Vorder- und Hinterachse, welche unter Stabilitätsgesichtspunkten optimiert ist, wird diese Zeitverzögerung vermieden.

Besonders bevorzugt wird eine feste Aufteilung des Bremsmoments zwischen der Vorder- und Hinterachse des Fahrzeugs gewählt, wenn die Gierratendifferenz einen vorgegebenen ersten Schwellwert überschreitet. Wird das Bremsmoment gemäß einer festen, unter Stabilitätsgesichtspunkten geeigneten Verteilung auf Vorder-und Hinterachse verteilt, sind auch starke Bremseingriffe ohne Verlust des Kraftschlusses zwischen Reifen und Fahrbahn möglich.

Ganz besonders bevorzugt wird nur an der Hinterachse Bremsmoment angefordert, wenn die Gierratendifferenz einen vorgegebenen zweiten Schwellwert unterschreitet. Somit wird für einen bestimmten Bereich von Gierratendifferenzen ein hoher Fahrkomfort errreicht.

Insbesondere wird der Anteil des Bremsmoments, welcher an der Hinterachse angefordert wird, proportional zu dem Maß reduziert, um das die Gierratendifferenz den zweiten Schwellwert überschreitet. Dies gewährleistet einen sanften Übergang zwischen einer komfortorientierten und einer stabilitätsorientierten Bremsmomentverteilung.

Zweckmäßigerweise erfolgt eine Überwachung des tatsächlich an der Hinterachse aufgebauten Bremsmoments. Somit kann erkannt werden, wenn z.B. auf Grund eines Schlupfreglereingriffs weniger Bremsmoment aufgebaut wurde, als der Anforderung entspricht.

Besonders zweckmäßig ist es, ein Bremsmoment an der Vorderachse anzufordern, wenn die Differenz zwischen angefordertem und tatsächlich aufgebautem Bremsmoment an der Hinterachse einen vorgegebenen Schwellwert überschreitet.

Ganz besonders zweckmäßig ist es, wenn das Bremsmoment an der Vorderachse nach Maßgabe der Differenz zwischen angefordertem und tatsächlich aufgebautem Bremsmoment an der Hinterachse gewählt wird. Dies gewährleistet eine schnellstmögliche Verringerung der Differenz zwischen Soll- und Ist-Gierrate.

Die Erfindung betrifft weiterhin ein Bremssystem für ein Kraftfahrzeug, welches an den Rädern zumindest einer Achse vorzugsweise hydraulische Reibbremsen aufweist, wobei ein Steuergerät des Bremssystems ein Verfahren nach mindestens einem der vorhergehenden Ansprüche ausführt.

Gemäß einer bevorzugten Ausführungsform der Erfindung weist das Bremssystem an den Rädern der Vorderachse hydraulische Reibbremsen und an den Rädern der Hinterachse elektromechanische Reibbremsen auf. Somit kann eine Giermomentregelung in günstigen Fällen ohne für den Fahrer hörbare Betätigung einer Hydraulikpumpe erfolgen.

Die Erfindung betrifft weiterhin die Verwendung eines erfindungsgemäßen Bremssystems in einem Fahrzeug, welches zumindest an den Rädern der Hinterachse einen elektrischen Antrieb aufweist, insbesondere Radnabenmotoren, wobei das Moment des elektrischen Antriebs getrennt auf die Hinterräder verteilt werden kann und das Bremsmoment an der Hinterachse zumindest teilweise durch den elektrischen Antrieb im Generatorbetrieb aufgebaut wird. Dies ermöglicht sowohl eine Rückgewinnung der Bremsenergie als auch eine komfortable Giermomentregelung. Hierbei werden besonders bevorzugt Radnabenmotoren eingesetzt, da diese ein geringes Trägheitsmoment aufweisen und somit eine besonders schnelle Reaktion ermöglichen.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein Blockdiagramm zur Ermittlung der angeforderten Bremsmomente,
- Fig. 2: ein Diagramm zu einem Ausführungsbeispiel der Strategie der Bremsmomentverteilung, und
- Fig. 3: einen Ablaufplan zur Ermittlung der angeforderten Bremsmomente gemäß einem Ausführungsbeispiel der vorliegenden Erfindung.

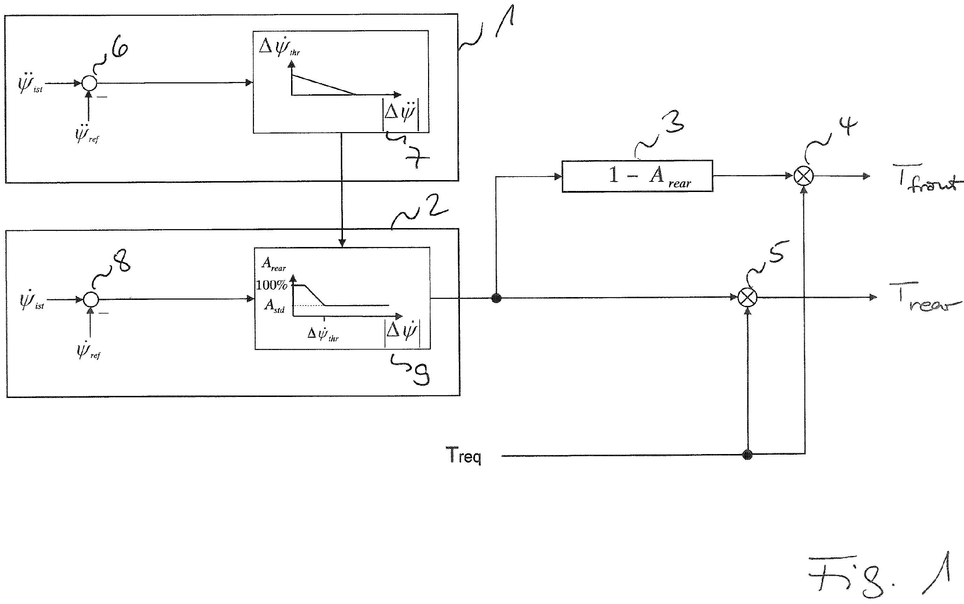

Fig. 1 zeigt ein Blockdiagramm zur Ermittlung der angeforderten Bremsmomente. In Block 1 wird hierbei in Abhängigkeit von der zeitlichen Änderung der Gierratendifferenz Δ*ψ̈* ein Schwellwert für die Gierratendifferenz Δ*ψ̇ₜₕᵣ* ermittelt, wobei in Subtrahierer 6 die Differenz zwischen der zeitlichen Ableitung von gemessener Gierrate *ψ̈ᵢₛₜ* und der zeitlichen Ableitung der aus einem Fahrzeugmodell berechneten Gierrate *ψ̈_{ref}* berechnet und in Block 7 eine funktionale Abhängigkeit zwischen dem Betrag der zeitlichen Änderung der Gierratendifferenz |Δ*ψ̈*| und dem Schwellwert für die Gierratendifferenz Δ*ψ̇ₜₕᵣ* ausgewertet wird.

Der Schwellwert für die Gierratendifferenz Δ*ψ̇ₜₕᵣ* begrenzt den Bereich von Gierratendifferenzen, für den in Block 2 ein den Standardanteil *A_{std}* überschreitender Anteil *Aᵣₑₐᵣ* des Bremsmoments an der Hinterachse ermittelt wird. Hierbei wird in Subtrahierer 8 die Differenz zwischen gemessener Ist-Gierrate *ψ̇ᵢₛₜ* und aus einem Fahrzeugmodell bestimmter Soll-Gierrate *ψ̇_{ref}* berechnet und in Block 9 eine funktionale Abhängigkeit zwischen dem Betrag der Gierratendifferenz |Δ*ψ̇*| und dem Anteil *Aᵣₑₐᵣ* des Bremsmoments an der Hinterachse ausgewertet.

Anhand von *Aᵣₑₐᵣ* wird in Block 3 der Anteil 1 *- Aᵣₑₐᵣ* des Bremsmoments berechnet, der an der Vorderachse angefordert werden muss. In Multiplikator 4 wird dieser Anteil mit dem für den Aufbau eines stabilisierenden Zusatzgiermoments benötigten Bremsmoment *T_{req}* multipliziert, um das an der Vorderachse anzufordernde Bremsmoment *T_{front}* zu ermitteln.

Das an der Hinterachse anzufordernde Bremsmoment *Tᵣₑₐᵣ* wird in Multiplikator 5 aus Bremsmoment *T_{req}* und Anteil *Aᵣₑₐᵣ* berechnet.

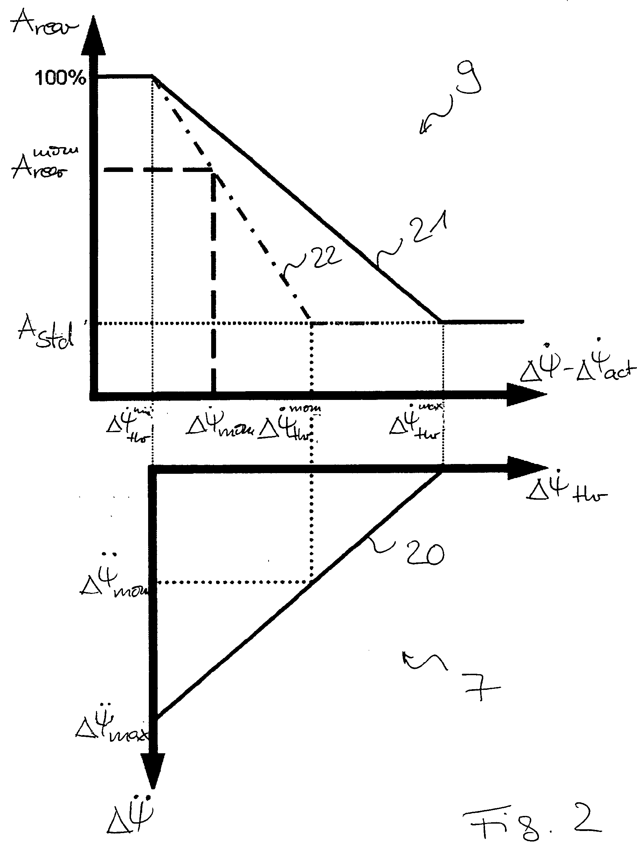

In Figur 2 ist ein bevorzugtes Ausführungsbeispiel der erfindungsgemäßen Strategie zur Ermittlung einer geeigneten Bremsmomentverteilung dargestellt. Diagramm 7 zeigt die funktionale Abhängigkeit 20 zwischen der zeitlichen Änderung der Gierratendifferenz Δ*ψ̈* (bzw. deren Betrag) und dem Schwellwert für die Gierratendifferenz Δ*ψ̇ₜₕᵣ* in dem unteren, gedrehten Koordinatensystem. Überschreitet die zeitliche Änderung der Gierratendifferenz Δ*ψ̈* einen vorgegebenen Schwellwert Δ*ψ̈*ₘₐₓ, so findet keine variable Verteilung des Bremsmoments zwischen Vorder- und Hinterachse statt, sondern es wird ein festes Verhältnis gewählt. Dann wird der prozentualer Anteil *A_{std}* des Bremsmoments an der Hinterachse angefordert, der beispielsweise bei 15% liegt. Der überwiegende Anteil des Bremsmoments wird somit an der Vorderachse angefordert, wenn die zeitliche Änderung der Gierratendifferenz ein hohes Bremsmoment erwarten lassen.

Ansonsten wird der Schwellwert Δ*ψ̇ₜₕᵣ,* der die obere Stützstelle für die Interpolation des Anteils *Aᵣₑₐᵣ* von Bremsmoment an der Hinterachse bildet, anhand von Linie 20 gewählt. Beträgt die momentane zeitliche Änderung der Gierrate beispielsweise Δ*ψ̈ₘₒₘ* , so findet eine variable Verteilung des Bremsmoments zwischen Vorder- und Hinterachse in einem Intervall bis zu dem momentan gewählten Schwellwert Δ*ψ̇ₜₕᵣ^{mom}* statt. Auch bei einer sehr langsamen Änderung der Gierratendifferenz wird dabei ein Schwellwert von Δ*ψ̇ₜₕᵣ*^{max} nicht überschritten.

Diagramm 9 zeigt die funktionale Abhängigkeit zwischen dem Anteil *Aᵣₑₐᵣ* von Bremsmoment an der Hinterachse und der Gierratendifferenz Δ*ψ̇* (bzw. deren Betrag) in dem oberen Koordinatensystem. Bei einem Schwellwert von Δ*ψ̇ₜₕᵣ*^{max} für die Gierratendifferenz erfolgt die Wahl von *Aᵣₑₐᵣ* gemäß Linie 21.

Überschreitet die um die Aktivierungsschwelle der Fahrstabilitätsregelung Δ*ψ̇_{act}* verminderte Gierratendifferenz Δ*ψ̇* - Δ*ψ̇_{act}* den Schwellwert, so wird die standardmäßige feste Verteilung zwischen Vorder- und Hinterachse gewählt.

Bei einem anhand von Diagramm 7 gewählten Schwellwert von Δ*ψ̇ₜₕᵣ^{mom}* erfolgt die Verteilung von Bremsmoment gemäß Linie 22. Beträgt die momentane Gierratendifferenz beispielsweise Δ*ψ̇ₘₒₘ*, so wird der Anteil *Aᵣₑₐᵣ^{mom}* des Bremsmoments an der Hinterachse angefordert. Wenn die momentane Gierratendifferenz einen Schwellwert von Δ*ψ̇ₜₕᵣ*^{min} unterschreitet, so wird nur an der Hinterachse Bremsmoment angefordert, um eine besonders komfortable Regelung zu ermöglichen.

Die dargestellten funktionalen Abhängigkeiten können zur Vermeidung numerischer Instabilitäten modifiziert werden.

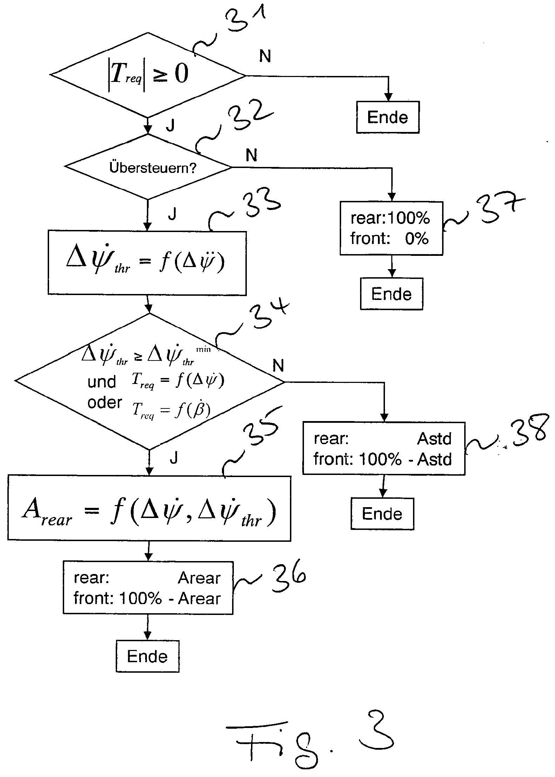

Fig. 3 zeigt einen Ablaufplan zur Ermittlung der angeforderten Bremsmomente gemäß eines Ausführungsbeispiels der vorliegenden Erfindung.

In Schritt 31 wird überprüft, ob der Betrag des angeforderten Bremsmoments größer als Null ist. Ist dies nicht der Fall, so erfolgt keine weitere Berechnung.

Anhand der in der Fahrstabilitätsregelung (ESC) vorhanden Situationserkennung wird in Schritt 32 überprüft, ob eine Übersteuersituation vorliegt. Ist dies nicht der Fall, liegt also eine Untersteuersituation vor, so wird das angeforderte Bremsmoment zu 100% an der Hinterachse aufgebaut.

Dann wird in Schritt 33 der Schwellwert Δ*ψ̇ₜₕᵣ* in Abhängigkeit von der zeitlichen Ableitung der Gierratendifferenz Δ*ψ̈* berechnet. Wie oben erläutert, erfolgt eine variable Verteilung des angeforderten Zusatzmoments nur, solange die momentane Gierratendifferenz Δ*ψ̇ₘₒₘ* diesen Schwellwert unterschreitet, um eine Gefährdung der Fahrstabilität durch übermäßige Hinterachsbremseingriffe bei großen Gierratendifferenzen zu vermeiden.

Wenn der berechnete Schwellwert Δ*ψ̇ₜₕᵣ* einen vorgegebenen Mindestschwellwert Δ*ψ̇ₜₕᵣ*^{min} unterschreitet, ändert sich die Gierratendifferenz schnell, so dass übermäßige Hinterachsbremseingriffe die Fahrstabilität gefährden könnten. Daher wird in Schritt 34 überprüft, ob Δ*ψ̇ₜₕᵣ* ≥ Δ*ψ̇ₜₕᵣ*^{min} gilt. Weiterhin muss das Zusatzmoment entweder vom Gierratenregler (Δ*ψ̇-*Regler) oder dem Schwimmwinkeländerungsregler (*β̇*-Regler) einer bekannten Giermomentenregelung (ESC) angefordert worden sein.

Ist dies nicht der Fall, dann wird in Schritt 38 das angeforderte Zusatzmoment gemäß der vorgegebenen Standardverteilung auf Vorder- und Hinterachse verteilt, um eine Gefährdung der Fahrstabilität und/oder unerwünschte Wechselwirkungen zwischen verschiedenen Reglern zu vermeiden. Wenn eine variable Verteilung des Bremsmoments zwischen Vorder- und Hinterachse zulässig ist, so wird diese in Schritt 36 anhand der oben beschriebenen Strategie berechnet.

Bei Anwendung der erfindungsgemäßen Strategie zur Ermittlung einer geeigneten Bremsmomentverteilung, wird in einer Übersteuersituation das einzustellende Zusatzgiermoment situationsabhängig mit einem variablen Verhältnis zwischen der Vorderachse und der Hinterachse durch Längskraftaufbau auf einer Fahrzeugseite erzeugt, wobei das Zusatzgiermoment in manchen Fällen zu 100% über die Hinterachse erzeugt werden kann. Somit werden störende Rückwirkungen der Fahrstabilitätsregelung vermieden, und bei Fahrzeugen mit einem elektrischen bzw. elektrisch betätigten Bremssystem an der Hinterachse lässt sich ein Komfortgewinn dadurch erzielen, dass ein fahrerunabhängiger Aufbau von Bremsmoment an der Hinterachse ohne störende Geräusche einer Hydraulikpumpe erreicht wird.

## Patentansprüche

1. Verfahren, bei dem die Fahrstabilität eines Fahrzeugs geregelt wird, wobei eine Gierratendifferenz mittels eines Zusatzgiermoments beeinflusst wird, welches durch den fahrerunabhängigen Aufbau von Bremsmoment an einem oder mehreren Rädern erzeugt wird, wobei eine Aufteilung des das Zusatzgiermoment beeinflussenden Bremsmoments in Übersteuersituationen zwischen der Vorder- und Hinterachse des Fahrzeugs variabel erfolgt, **dadurch gekennzeichnet, dass** der Anteil des Bremsmoments an der Hinterachse des Fahrzeugs abhängig von der Größe der Gierratendifferenz gewählt wird.

2. Verfahren nach Anspruch 1, **dadurch gekennzeichnet, dass** eine feste Aufteilung des Bremsmoments zwischen der Vorder- und Hinterachse des Fahrzeugs gewählt wird, wenn die zeitliche Änderung der Gierratendifferenz einen vorgegebenen Schwellwert überschreitet.

3. Verfahren nach Anspruch 1 oder 2, **dadurch gekennzeichnet, dass** eine feste Aufteilung des Bremsmoments zwischen der Vorder- und Hinterachse des Fahrzeugs gewählt wird, wenn die Gierratendifferenz einen vorgegebenen ersten Schwellwert überschreitet.

4. Verfahren nach Anspruch 3, **dadurch gekennzeichnet, dass** nur an der Hinterachse Bremsmoment angefordert wird, wenn die Gierratendifferenz einen vorgegebenen zweiten Schwellwert unterschreitet.

5. Verfahren nach Anspruch 4, **dadurch gekennzeichnet, dass** der Anteil des Bremsmoments, welcher an der Hinterachse angefordert wird, proportional zu dem Maß reduziert wird, um das die Gierratendifferenz den zweiten Schwellwert überschreitet.

6. Verfahren nach mindestens einem der vorhergehenden Ansprüche, **dadurch gekennzeichnet, dass** eine Überwachung des tatsächlich an der Hinterachse aufgebauten Bremsmoments erfolgt.

7. Verfahren nach Anspruch 6, **dadurch gekennzeichnet, dass** ein Bremsmoment an der Vorderachse angefordert wird, wenn die Differenz zwischen angefordertem und tatsächlich aufgebautem Bremsmoment an der Hinterachse einen vorgegebenen Schwellwert überschreitet.

8. Verfahren nach Anspruch 7, **dadurch gekennzeichnet, dass** das Bremsmoment an der Vorderachse nach Maßgabe der Differenz zwischen angefordertem und tatsächlich aufgebautem Bremsmoment an der Hinterachse gewählt wird.

9. Bremssystem für ein Kraftfahrzeug, welches an den Rädern zumindest einer Achse vorzugsweise hydraulische Reibbremsen aufweist, **dadurch gekennzeichnet, dass** ein Steuerge rät des Bremssystems ein Verfahren nach mindestens einem der vorhergehenden Ansprüche ausführt.

10. Bremssystem nach Anspruch 9, **dadurch gekennzeichnet, dass** das Bremssystem an den Rädern der Vorderachse hydraulische Reibbremsen und an den Rädern der Hinterachse elektromechanische Reibbremsen aufweist.

11. Verwendung eines Bremssystems nach Anspruch 9 oder 10 in einem Fahrzeug, welches zumindest an den Rädern der Hinterachse einen elektrischen Antrieb aufweist, insbesondere Radnabenmotoren, wobei das Moment des elektrischen Antriebs getrennt auf die Hinterräder verteilt werden kann und das Bremsmoment an der Hinterachse zumindest teilweise durch den elektrischen Antrieb im Generatorbetrieb aufgebaut wird.

## Claims

1. Method in which the driving stability of a vehicle is controlled, wherein a yaw rate difference is influenced by means of an additional yaw moment which is generated by building up braking torque independently of the driver at one or more wheels, wherein the braking torque which influences the additional yaw moment is variably apportioned between the front axle and the rear axle of the vehicle in oversteering situations, **characterized in that** the portion of the braking torque at the rear axle of the vehicle is selected as a function of the magnitude of the yaw rate difference.

2. Method according to Claim 1, **characterized in that** a fixed apportionment of the braking torque between the front and rear axles of the vehicle is selected if the change in the yaw rate difference over time exceeds a predefined threshold value.

3. Method according to Claim 1 or 2, **characterized in that** a fixed apportionment of the braking torque between the front and rear axles of the vehicle is selected if the yaw rate difference exceeds a predefined first threshold value.

4. Method according to Claim 3, **characterized in that** braking torque is requested only at the rear axle if the yaw rate difference undershoots a predefined second threshold value.

5. Method according to Claim 4, **characterized in that** the portion of the braking torque which is requested at the rear axle is reduced in proportion to the amount by which the yaw rate difference exceeds the second threshold value.

6. Method according to at least one of the preceding claims, **characterized in that** the braking torque which is actually built up at the rear axle is monitored.

7. Method according to Claim 6, **characterized in that** a braking torque is requested at the front axle if the difference between the requested braking torque and the actually built-up braking torque at the rear axle exceeds a predefined threshold value.

8. Method according to Claim 7, **characterized in that** the braking torque at the front axle is selected in accordance with the difference between the requested braking torque and the actually built-up braking torque at the rear axle.

9. Brake system for a motor vehicle which preferably has hydraulic friction brakes at the wheels of at least one axle, **characterized in that** a control unit of the brake system carries out a method according to at least one of the preceding claims.

10. Brake system according to Claim 9, **characterized in that** the brake system has hydraulic friction brakes at the wheels of the front axle and electromechanical friction brakes at the wheels of the rear axle.

11. Use of a brake system according to Claim 9 or 10, in a vehicle which has an electric drive at least at the wheels of the rear axle, in particular wheel hub motors, wherein the torque of the electric drive can be distributed separately to the rear wheels, and the braking torque at the rear axle is built up at least partially by the electric drive in the generator mode.

## Revendications

1. Procédé de régulation de la stabilité de roulage d'un véhicule, dans lequel un couple supplémentaire de lacet agit sur une différence de vitesse de lacet, le couple étant produit en établissant de manière indépendante du conducteur un couple de freinage sur une ou plusieurs roues, une répartition du couple de freinage agissant sur le couple supplémentaire de lacet étant réalisée de manière variable entre l'essieu avant et l'essieu arrière du véhicule dans des situations de sur-braquage, **caractérisé en ce que** la fraction du couple de freinage appliquée sur l'essieu arrière du véhicule est sélectionnée en fonction du niveau de différence de vitesse de lacet.

2. Procédé selon la revendication 1, **caractérisé en ce qu'**une répartition fixe du couple de freinage entre l'essieu avant et l'essieu arrière du véhicule est sélectionnée lorsque la variation dans le temps de la différence de vitesse de lacet dépasse une valeur de seuil prédéterminée.

3. Procédé selon les revendications 1 ou 2, **caractérisé en ce qu'**une répartition fixe du couple de freinage entre l'essieu avant et l'essieu arrière du véhicule est sélectionnée si la différence de vitesse de lacet dépasse une première valeur de seuil prédéterminée.

4. Procédé selon la revendication 3, **caractérisé en ce qu'**un couple de freinage est imposé uniquement sur l'essieu arrière si la différence de vitesse de lacet n'atteint pas une deuxième valeur de seuil prédéterminée.

5. Procédé selon la revendication 4, **caractérisé en ce que** la fraction du couple de freinage imposée à l'essieu arrière est réduite proportionnellement à la mesure dans laquelle la différence de vitesse de lacet n'atteint pas la deuxième valeur de seuil.

6. Procédé selon au moins l'une des revendications précédentes, **caractérisé en ce qu'**il comporte une surveillance du couple de freinage effectivement appliqué sur l'essieu arrière.

7. Procédé selon la revendication 6, **caractérisé en ce qu'**un couple de freinage est imposé sur l'essieu avant si la différence entre le couple de freinage imposé et le couple de freinage effectivement établi sur l'essieu arrière dépasse une valeur de seuil prédéterminée.

8. Procédé selon la revendication 7, caractérisé en de que le couple de freinage sur l'essieu avant est sélectionné en fonction de la différence entre le couple de freinage imposé et le couple de freinage effectivement établi sur l'essieu arrière.

9. Système de freinage pour véhicule automobile qui présente sur les roues d'au moins un essieu des freins à friction de préférence hydrauliques, **caractérisé en ce qu'**un appareil de commande du système de freinage exécuté un procédé selon au moins l'une des revendications précédentes.

10. Système de freinage selon la revendication 9, **caractérisé en ce que** le système de freinage présente sur les roues de l'essieu avant des freins de friction hydrauliques et sur les roues de l'essieu arrière des freins de friction électromécaniques.

11. Utilisation d'un système de freinage selon les revendications 9 ou 10 dans un véhicule qui présente un entraînement électrique au moins sur les roues de l'essieu arrière, en particulier des moteurs placés dans les moyeux de roues, le couple de l'entraînement électrique pouvant être réparti distinctement entre les roues arrière et le couple de freinage établi sur l'essieu arrière étant établi au moins en partie par un entraînement électrique fonctionnement en génératrice.
